# EUROPEAN PATENT SPECIFICATION

(11) **EP 1 945 416 B1**
(45) Date of publication and mention of the grant of the patent: **02.01.2013**
(21) Application number: 06844023.9
(22) Date of filing: 16.10.2006
(51) Int. Cl.: B25J 19/02, B25J 9/16, G06K 9/00, G06K 9/64, G06T 1/00, G06T 7/00

(54) **A METHOD AND AN ARRANGEMENT FOR LOCATING AND PICKING UP OBJECTS FROM A CARRIER**
VERFAHREN UND ANORDNUNG ZUR SUCHE UND ENTNAHME VON OBJEKTEN AUF EINEM TRÄGER
PROCÉDÉ ET DISPOSITIF PERMETTANT DE DÉTECTER ET DE RAMASSER LES OBJETS PLACÉS SUR UN SUPPORT

(30) Priority: 18.10.2005 SE 0502305
(43) Date of publication of application: 23.07.2008
(73) Proprietor: Mabema AB, 583 30 Linköping (SE)
(72) Inventor: REYIER, Anders, S-691 52 Karlskoga (SE); LARSSON, Per, 169 32 Solna (SE)
(74) Representative: Bokinge, Ole
(86) International application number: PCT/SE2006/050402
(87) International publication number: WO 2007/046763

(56) References cited:
- EP-A1- 1 371 940
- EP-A2- 0 951 968
- EP-A2- 1 431 008
- WO-A1-2005/018883
- US-A- 4 486 842
- US-A- 4 873 651
- US-A1- 2004 080 294
- US-B1- 6 721 444
- DOIGNON C. ET AL.: 'A METHOD AND AN ARRANGEMENT FOR LOCATING AND PICKING UP OBJECTS FROM A CARRIER' INTELLIGENT ROBOTS AND SYSTEMS '94. ADVANCED ROBOTIC SYSTEMS AND THE REAL WORLD '94. PROCEEDINGS OF THE IEEE/RSJ/GI INTERNATIONAL CONFERENCE vol. 3, 12 September 1994 - 16 September 1994, pages 2007 - 2014, XP008080106

## Description

### FIELD OF THE INVENTION

The invention relates to a method and an arrangement for locating and picking up objects from a carrier such as a bin where a robot with a movable robot arm is used to pick the objects.

### BACKGROUND OF THE INVENTION

In many industrial applications, it is necessary to pick up objects from a carrier such as a bin or a pallet in order to feed the objects to a machine for further processing. Such operations are often performed by industrial robots. It has been proposed that industrial robots used for picking objects from a carrier be equipped with machine vision in order to assist the robot in picking objects. For example, US patent No. 4412293 discloses a robot system embodying vision and a parallel jaw gripper to acquire randomly oriented workpieces having cylindrical outer surfaces piled in bins. For vision, the robot system uses video cameras that interface with a computer. A bin-picking system is also disclosed in US patent No. 6,721,444.

It is an object of the present invention to provide an improved method and an improved arrangement for locating and picking objects from a carrier.

### DISCLOSURE OF THE INVENTION

The invention relates to a method for locating and picking up objects placed on a carrier. The method comprises the steps of performing a scanning operation over at least a part of the carrier by using a line laser scanner and using the result of the scanning to generate a virtual three-dimensional surface that represents the area that has been scanned. The virtual three-dimensional surface is compared to a pre-defined virtual object corresponding to an object to be picked from the carrier. Thereby, a part of the three-dimensional surface that most closely matches the pre-defined virtual object is identified. A robot arm is then caused to move to a location corresponding to the identified part of the virtual three-dimensional surface and pick up an object from the carrier at this location.

In one embodiment, the scanner is moved in a path over the carrier during the scanning operation. Preferably, the scanner follows a linear path over the carrier. However, embodiments of the invention can also be envisaged where the scanner remains in one place during the scanning operation but is turned/pivoted about an axis such that the laser may perform a sweep over an area.

In an advantageous embodiment, the scanner is a unit that is separate from the robot arm.

However, it is also possible to envisage embodiments where the scanner is located on the robot arm itself. In such embodiments, the scanner may be moved over the carrier in a movement that is performed by the robot arm.

The step of comparing the virtual three-dimensional surface to a pre-defined virtual object may includes moving and/or rotating the virtual object until it fits a part of the virtual three-dimensional surface. Information about the movement and/or rotation of the virtual object is used to determine how the object on the carrier shall be picked up.

The object that is picked up from the carrier may be picked by a gripper on the robot arm and the gripper may comprise gripper fingers of which at least one is moved relative to another gripper finger to grip the object on the carrier.

A random selection can be used to choose between different parts of the virtual three-dimensional surface in the case that two or more parts of the virtual three-dimensional surface matches the virtual object to the same degree.

The step of comparing the virtual three-dimensional surface to a pre-defined virtual object may include rotating the virtual object until it fits a part of the virtual three-dimensional surface and information about the orientation of the virtual object can be used to choose between different parts of the virtual three-dimensional surface in the case that two or more parts of the virtual three-dimensional surface matches the virtual object to the same degree.

In one embodiment, the carrier is a bin. Other carriers are also possible. For example, the carrier may be a conveyor such as a belt conveyor. The carrier could also be a pallet.

The invention also relates to an arrangement for locating and picking up objects placed on a carrier. The arrangement comprises a line laser scanner arranged to scan at least a part of carrier on which objects may be placed. The arrangement further comprises a robot having a robot arm adapted to seize objects and a computer connected to the line laser scanner. The computer further has computer software designed to generate a virtual three-dimensional surface based on data received from the scanner during a scanning operation. The computer also has software representing a virtual object and software for comparing the virtual object to different parts of the virtual three-dimensional surface and for determining which part or parts of the virtual surface that most closely matches the virtual object. The computer is connected to the robot and it has software for guiding the movement of the robot arm to a location on the carrier corresponding to a part of the virtual three-dimensional surface that most closely matches the virtual object and pick up an object at that location. Preferably, the object that is picked up from a carrier is defined not only by its location but also by its orientation.

The line laser scanner may be separate from the robot and arranged to move in a pre-determined path defined by a guide structure on which the scanner is arranged to move. The guide structure may be a beam that defines a linear path for the line laser scanner.

Alternatively, the line laser scanner is arranged on the robot arm.

The robot arm may be adapted to seize objects by having a gripper with gripper fingers, at least one of the gripper fingers being movable.

### BRIEF DESCRIPTION OF THE DRAWINGS

- Fig. 1: shows the inventive arrangement.
- Fig. 2: is a side view of the same arrangement that is indicated in Fig. 1.
- Fig. 3: is a view corresponding to Fig. 2 and shows a somewhat different environment for the inventive arrangement.
- Fig. 4a - 4c: illustrate a gripping operation.
- Fig. 5a - 5c: illustrate a variation of the operation shown in Fig. 4a - 4c.
- Fig. 6a - 6c: illustrate yet another gripping operation.
- Fig. 7: is a schematic representation of how a virtual surface is generated that represents a real surface.
- Fig. 8: is a schematic representation of how a virtual object is matched with a virtual surface.
- Fig. 9: is a schematic illustration of an embodiment constituting an alternative to the embodiment of Fig. 1.

### DETAILED DESCRIPTION OF THE INVENTION

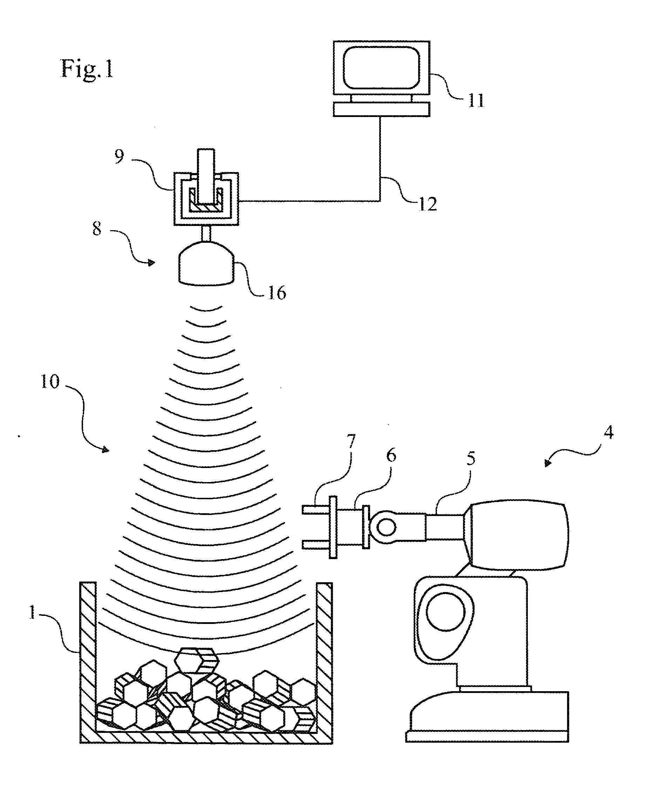

Initially, the inventive arrangement will now be described with reference to Figure 1 -Figure 3. The arrangement that is the subject of the present invention shall be used for locating and picking up objects 2 placed on a carrier 1. In Fig. 1, the carrier 1 is a bin or box 1 from which object 2 are to be picked. The arrangement comprises a line laser scanner 8 arranged to perform a scanning operation such that it can be used to scan at least a part of carrier 1 on which objects 2 may be placed. In a line laser, the light from a spot laser source is stretched into a line. This can be achieved by the use of a suitable lens made of, for example, glass, plexiglass or quartz. As best seen in Fig. 1, the laser scanner 8 comprises a laser emitter 16 from which a line laser ray 10 may be emitted and a laser detector 17 that can detect a laser beam that has been emitted from the emitter 16 and reflected from a surface. The laser emitter 16 may be, for example, a line laser of the kind that is marketed under the name Lasiris™ by StockerYale Canada, 275 Kesmark, Montreal, Quebec, Canada. However, other laser emitters are of course also possible. The arrangement further comprises a robot 4 having a robot arm 5 adapted to seize objects 2. A computer 11 is connected to the line laser scanner 8 via a connection 12 which may be a wire but could also be a wireless connection. As will be explained in more detail with reference to the method, the computer 11 has computer software designed to generate a virtual three-dimensional surface based on data received from the scanner 8 during a scanning operation. The computer 11 also has software representing a virtual object 15 and software for comparing the virtual object 15 to different parts of the virtual three-dimensional surface and for determining which part or parts of the virtual surface that most closely matches the virtual object 15. It should be understood that the virtual object 15 corresponds to physical objects 2 that are to be picked from the carrier 1. The virtual object 15 may be based on, for example, a measurement or scanning of a physical object 2. Alternatively, the virtual object 15 may be based on a CAD model used for manufacturing a corresponding physical object 2. The computer 11 is further connected to the robot 4 and it has software for guiding the movement of the robot arm 5 to a location on the carrier corresponding to a part of the virtual three-dimensional surface that most closely matches the virtual object and pick up an object 2 at that location and at an orientation that fits the orientation of the object 2 to be picked up. For illustrative purposes, the computer 11 is shown separate from the robot 4. However, it should be understood that the computer 11 could also be an integral part of the robot 4.

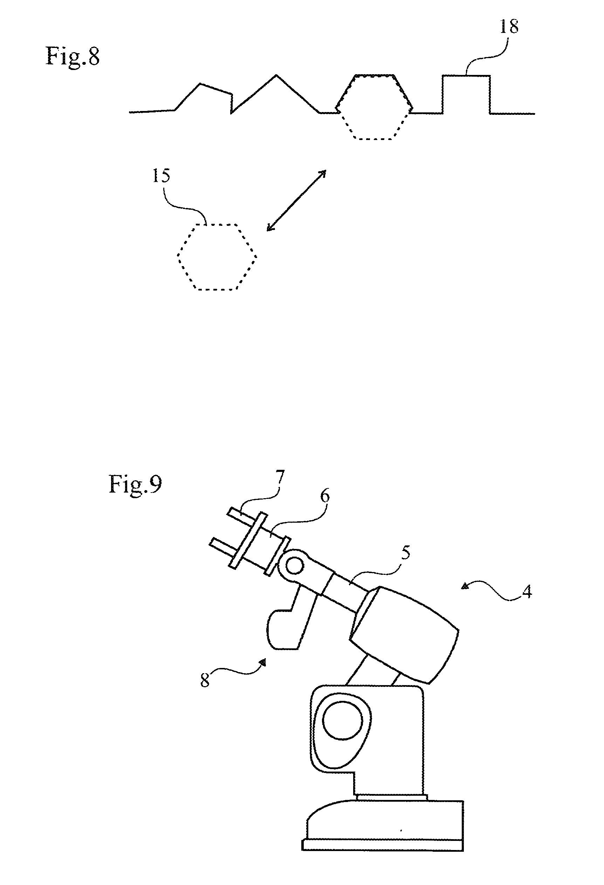

In the embodiments illustrated in Figs 1 - 3, the line laser scanner 8 is separate from the robot 4 and arranged to move in a pre-determined path defined by a guide structure 9 on which the scanner 8 is arranged to move. In a preferred embodiment, the guide structure 9 is a beam 9 that defines a linear path for the line laser scanner. However, it should be understood that that the line laser scanner 8 may also be arranged on the robot arm 5. Such an embodiment is schematically indicated in Fig. 8.

In principle, the robot arm 5 may have many different devices for picking up objects 2. For example, it could be provided with a suction cup or with a magnet for picking up metal objects 2. However, in preferred embodiments of the invention, the robot arm 5 is adapted to seize objects by using a gripper 6 with gripper fingers 7. At least one of the gripper fingers 7 is movable. In Fig. 1, two gripper fingers 7 are indicated but it should be understood that the gripper 7 could have more than two gripper fingers 7. For example, it could have three, four, five or even more gripper fingers 7. Preferably, at least two gripper fingers 7 are movable and movable in relation to each other. The gripper 6 is preferably articulated on the robot arm 5 such that the gripper 6 may be pivoted around different axes and thereby be oriented in relation to an object 2 that is to be picked up by the gripper 6. The use of a gripper 6 with movable finger 7 entails the advantage that greater precision can be achieved and the reliability of the grip is high. The gripper 6 is preferably arranged such that it can be pivoted about axes that are perpendicular to each other. Preferably, it can be pivoted about at least three axes perpendicular to each other. In advantageous embodiments of the invention, the gripper 6 may be pivoted about more than three axes. For example, it may be arranged such that it can be pivoted about six axes.

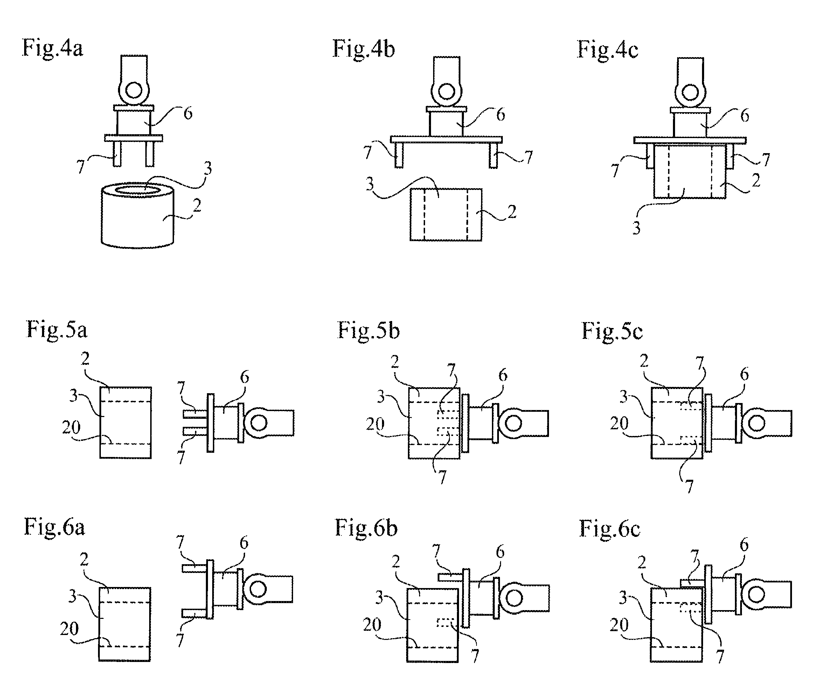

The operation of the gripper fingers will now be briefly explained with reference to Figs. 4a - 4c, 5a - 5c and 6a - 6c. In Fig. 4a, the gripper 6 is placed above an object 2 to be picked. As indicated in Fig. 4b, the gripper fingers 7 are then separated, i.e. moved away from each other, such that the object 2 can be placed between the fingers 7. The arm 5 with the gripper 6 moves into contact with the object 2 and the fingers 7 move towards each other and the object 2 is gripped between the fingers 7 as shown in Fig. 4c. The object 2 can then be lifted by the robot arm 5.

In Fig. 5a, the gripper 6 is used to pick up an object 2 with a through-hole 3 and an inner wall 20. The fingers 7 are first brought together and then inserted into the through-hole 3 as indicated in Fig. 5b. The fingers 7 are then separated from each other and brought into contact with the inner wall 20. The pressure from the fingers 7 against the inner wall 20 will then assure a firm grip and the object 2 can be lifted.

In Figs. 6a - 6c, a gripping operation is illustrated where one finger 7 contacts the object 2 on an exterior surface of the object 2 and another finger 7 contacts the inner wall 20 of the object.

It should be understood that the different grips illustrated in Figs. 4a - 6c are not all equally well suited to pick up a given object 2. Depending on the shape of each specific object 2 that is to be picked up, different grips may be preferred. It should also be understood that, for each specific object, there may be a direction of movement for the gripper 6 that is optimal for approaching the object.

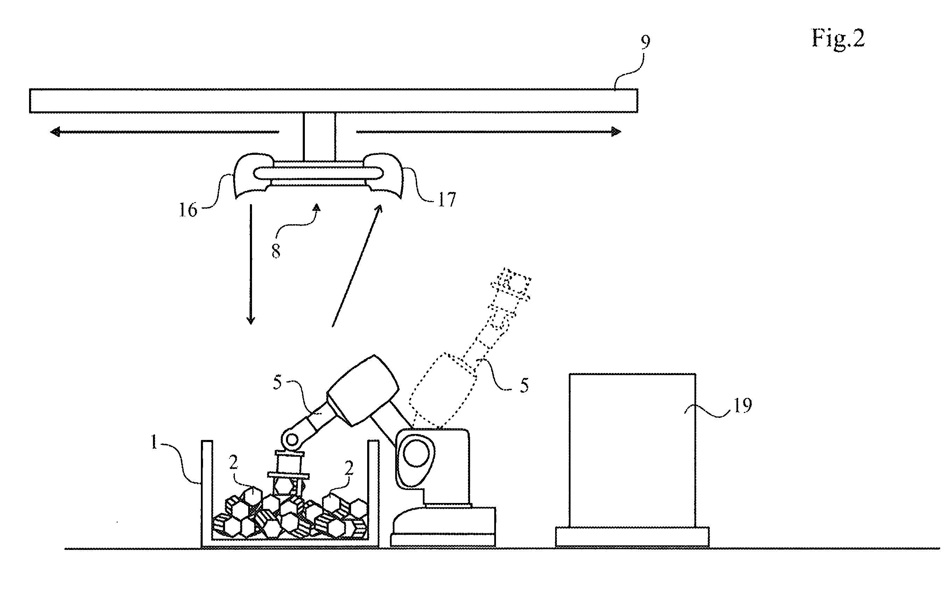

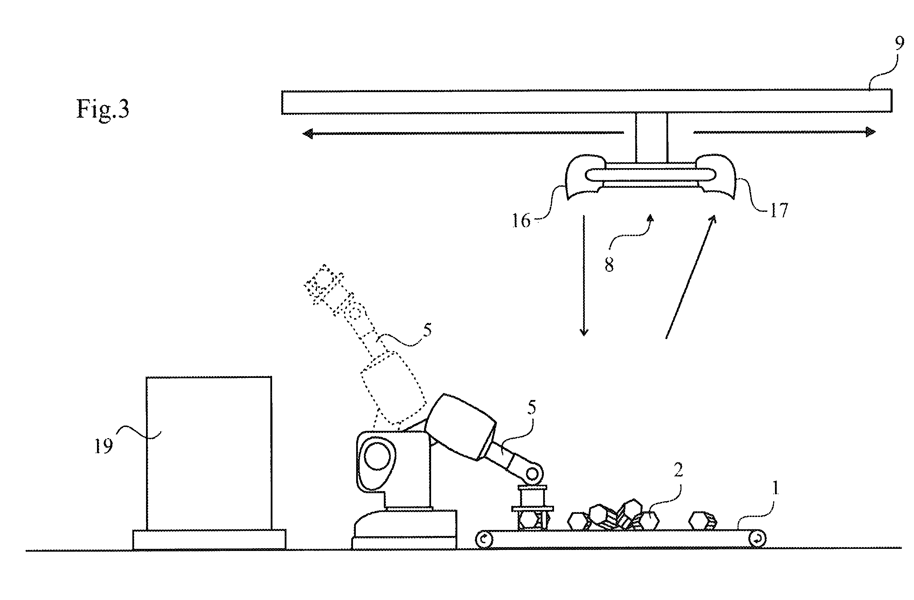

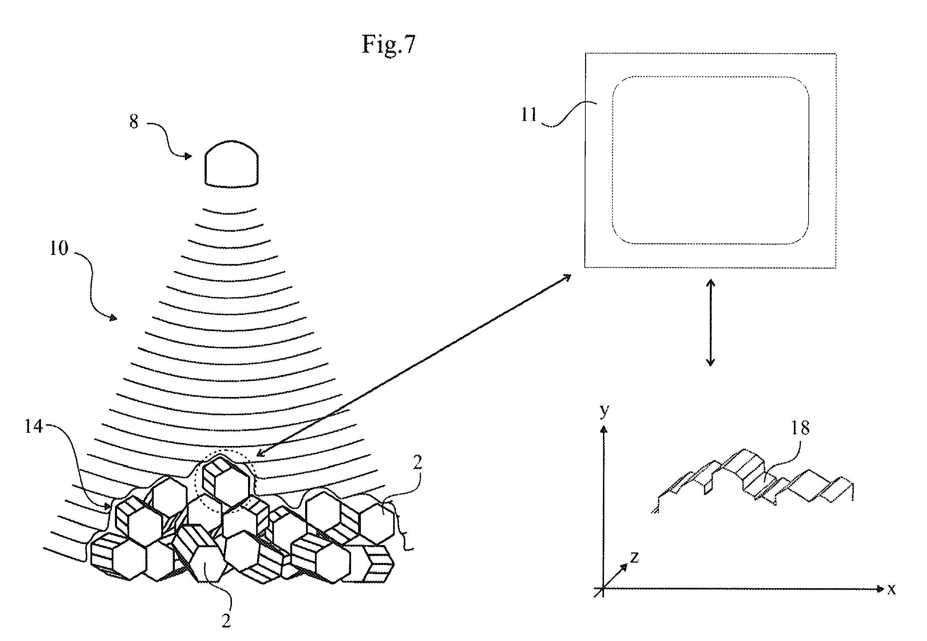

In operation, the invention functions in the following way. Objects 2 placed arrive on a carrier 1 that may be for example a bin 1 as illustrated in Fig. 1 and Fig. 2 or a belt conveyor as illustrated in Fig. 3. It should be understood that the carrier 1 could also be something else, for example a pallet. The scanner 1 performs a scanning operation over at least a part of the carrier 1 by using the line laser scanner 8. The area that is scanned has a surface 14 corresponding to a pile of objects 2 lying on the carrier 1. The result of the scanning operation is then used to generate a virtual three-dimensional surface 18 representing the area that has been scanned. i.e. the virtual surface 18 corresponds to the real surface 14. This operation may take place in the computer 11 as schematically indicated in Fig. 7. As indicated in Fig. 7, the virtual surface 18 is defined by coordinates that may vary along three different axes x, y, z that are perpendicular to each other. The virtual three-dimensional surface 18 is then compared to a pre-defined virtual object 15 that corresponds to an object 2 to be picked from the carrier 1. Through the comparison, a part of the three-dimensional surface 18 that most closely matches the pre-defined virtual object 15 is identified. The robot arm 5 is then caused to move to a location corresponding to the identified part of the virtual three-dimensional surface and pick up an object 2 from the carrier 1 at this location. The gripper 6 may also be pivoted such that it neatly fits the orientation of the object to be picked up.

Strictly speaking, a surface is two-dimensional. As used herein, the term "three-dimensional surface" should be understood as the surface of a three-dimensional object, i.e. a surface that may extend through more than one plane. As an alternative to the term "virtual three-dimensional surface", one could speak of a virtual surface that represents the outer surface of a three-dimensional object.

The step of comparing the virtual three-dimensional surface 18 to a pre-defined virtual object 15 can be performed in the following way. The virtual object 15 is moved and rotated until it fits a part of the virtual three-dimensional surface 18 as indicated in Fig. 8. Information about the movement and rotation of the virtual object 15 directly corresponds to the orientation and location of a physical object 2 on the carrier 1 and this information can then be used to determine how the object 2 on the carrier 1 shall be picked up. The matching may be performed by using a shape-sensing algorithm such as Spin-Image or spin image representation (see for example A. E. Johnson and M. Hebert, "Using Spin Images for Efficient Object Recognition in Cluttered 3D scenes", IEEE Trans. Pattern Analysis and Machine Intelligence, 21 (5, pp. 433-449, 1999). Alternatively, it may be possible to use ICP (Iterative Closest Point) or a combination of Spin-Image and ICP.

In the case that two or more parts on the virtual three-dimensional surface 18 matches the virtual object 15 to the same degree, a random selection may be used to chose between different parts of the virtual three-dimensional surface and thereby also between different objects to be picked up. Alternatively, information about the orientation of the virtual object 15 may be used to choose between different parts of the virtual three-dimensional surface in the case that two or more parts of the virtual three-dimensional surface matches the virtual object to the same degree. As indicated earlier, all grips are not equally well suited for all objects 2. For a given object 2, a preferred grip may be included in the software of the computer 11 that controls the robot 4. For an object 2 with a through-hole 3, the preferred grip may be (for example) the grip illustrated in Figs. 5a - 5c. For a given object on the carrier 1, it may be so that only one grip is in fact possible. If two or more parts of the virtual surface 18 match the virtual object 15 equally well, the software that controls the robot 4 may include an instruction to choose the part of the virtual surface 18 that corresponds to the preferred grip. This gives the inventive arrangement an opportunity to make an intelligent choice between different objects 2 on the carrier also when two objects 2 on the carrier at first sight could appear to be equally well within reach. To check which grips that are possible for a given object 2, the software checks how the virtual object 15 has been moved and rotated to fit the corresponding part of the virtual surface 18. Information about this movement can be directly translated into information about the orientation of the real object. Of course, the same information may also be used to control the movement of the gripper 6 on the robot arm 5 and to determine from which direction the gripper 6 shall approach the object 2 in order to be able to use the preferred grip. This entails the advantage that the gripper 6 can be accurately guided to a perfect grip for each object to pick up. The direction from which the gripper 6 approaches an object is also important since some directions of approach may entail a risk of collision between the gripper and parts of the carrier 1 or between the gripper and other objects 2 than the object that is to be picked up. Some object may also have such a shape that they are easier to grip from one direction than from another direction.

Furthermore, the scanning operation may also extend to the carrier 1 itself. The result of this part of the scanning operation can be used to prevent the gripper 6 from colliding with the edges or walls of a carrier 6. Alternatively, the contours of the carrier 1 may be pre-defined in the controlling software, just like the virtual object 15. It should be understood that when a large number of unsorted objects arrive in a heap, some objects will initially simply not be possible to grip since other objects prevent access by the gripper to these objects. It may also be so that the location and orientation of an object in relation to the edges of the carrier (for example the walls of a bin 1) means that it is initially difficult for the gripper 6 to gain access to these objects, especially when other objects 2 limit the access. The software that controls the movements of the robot arm 5 and the gripper 6 on the robot arm is preferably designed to take this into account. Consequently, when a choice is to be made between two different objects 2 on the carrier 1, the software may consider the risk of collision both with other objects and with parts of the carrier 1. In doing this, the software may be designed to consider the direction from which the gripper must approach the object which is to be picked up. This may constitute a further criterion for object selection.

It should also be understood that the criterion "preferred grip" may be used not only as a complement to the criterion "best match" but as an alternative to that criterion. In practice, this could mean that the software first seeks to identify objects 2 that permit a preferred grip. Optionally, if there are several objects 2 that permit a preferred grip, the criterion "best match" could be used to make a final selection.

During the scanning operation, the scanner 8 is preferably moved in a path over the carrier 1 and preferably in a linear path. However, it should be understood that nonlinear paths are in fact conceivable. It should also be understood that the scanner 8 may be stationary and that the scanning operation may include rotating the laser emitter 16 instead of moving it along a linear path.

It should also be understood that the scanner 8 may be located on the robot arm 5 as indicated in Fig. 9 and that that the movement of the scanner 8 over the carrier 1 may be performed by the robot arm 5.

The complete cycle of the inventive arrangement is thus as follows. Objects 2 that may be randomly oriented arrive on a carrier 1 that may be a bin 1 as indicated in Fig. 2 or a belt conveyor as indicated in Fig. 3. The scanner 8 performs a scanning operation and the data resulting from the scanning operation is sent to the computer 11 where the data is converted into a virtual three-dimensional surface 18. A pre-defined virtual object 15 is compared to the virtual surface 18 until a match is identified. The computer controls the robot 4 and orders the robot to use the arm 5 with the gripper 6 to pick up the identified object 2. When the object 2 has been picked up by the robot arm 5, the robot arm moves the object to a further workstation 19 that may be, for example, a machine for further processing of the object 2. During the time it takes for the robot to move the object to a further workstation, a new scanning operation may be performed such that a new cycle is started even before the preceding cycle has been completed.

The invention entails, inter alia, the advantage that randomly oriented objects arriving piled upon each other can be quickly and reliably identified and picked up individually. The invention also makes it possible to pick up objects from an optimum direction and with a very exact and reliable grip. As indicated above, embodiments of the invention can also reduce the risk that the gripper 6 or the robot arm 5 collides with the surroundings, e.g. edges or walls of a carrier 1.

If the scanner 8 is separate from the robot 4, a new scanning operation can be initiated while the robot arm 5 delivers an object at another location. This can make the process faster.

The use of a line laser means that an entire area can be scanned during one single movement of the scanner which would not be possible to achieve with a spot laser.

The invention has been described above with reference to a method and an arrangement where a robot arm is used to pick up objects. However, embodiments are also conceivable where the above indicated method for scanning and identifying three-dimensional structures can be used for other purposes. For example, the method of performing a scanning with a line laser and generating a virtual three-dimensional surface could be used to identify and analyze faults in various objects. Another possible use may be to determine the need for further machining on a work piece. Embodiments without a robot arm and/or for other purposes than picking up objects are thus conceivable. The invention can thus also be defined in terms of a method (and an arrangement) for identifying and analyzing objects (or groups of objects) by scanning with a line laser device and generating a virtual three-dimensional model which is then compared with a pre-defined virtual object. The comparison can then be followed by an action that depends on the result of the comparison. This action can be, for example, a machining action performed on a work piece or the action may comprise the use of a robot arm to pick up an object as described above.

An example of such a possible method will be described in the following. A pre-defined virtual object represents the shape that a work piece should have when the work piece has attained its final shape. A scanning operation is performed and the scanning is used to generate a virtual three-dimensional surface or model which is then compared with the pre-defined virtual object. The comparison shows that the work piece has not yet attained its final shape. The comparison also reveals where the work piece differs from the pre-defined virtual object. Based on this information, an instruction is given to a machine such as a cutter, a drill or a turning lathe that performs a machining operation on the work piece in order to make the work piece match the pre-defined virtual object. A scanning operation can then be performed again to check that the work piece has attained the desired shape.

Another possibility may be identification of faulty objects. For example, an object arrives on a carrier. The object is scanned with a line laser and the result of the scanning is compared with a pre-defined virtual object. As a result of the comparison, the system determines whether the object matches the pre-defined virtual object or not. If there is a match, the object is deemed to be correct. The object can then be used, sent to a subsequent work station or delivered to a final user. If there is an error, the object can be removed. The inventive method and the inventive arrangement can thus be used for quality control. Otherwise, the method and arrangement may be identical to the method/arrangement used for picking objects from a carrier.

The invention can thus be defined in terms of a method for recognizing objects, the method comprising a scanning operation over at least a part of an object (or several objects) by using a line laser scanner 8; using the result of the scanning to generate a virtual three-dimensional surface representing the area that has been scanned; comparing the virtual three-dimensional surface to a pre-defined virtual object 15 corresponding to the object (or to one object among many objects) and performing an action in response to the result of the comparison. Naturally, the invention can also be defined in terms of an arrangement for carrying out such a method.

## Claims

1. A method for locating and picking up objects (2) placed on a carrier (1), the method comprising the steps of:
a) performing a scanning operation over at least a part of the carrier (1) by using a line laser scanner (8);
b) using the result of the scanning to generate a virtual three-dimensional surface representing the area that has been scanned;
c) comparing the virtual three-dimensional surface to a pre-defined virtual object (15) corresponding to an object (2) to be picked from the carrier (1) and thereby identifying a part of the three-dimensional surface that most closely matches the pre-defined virtual object (15); and
d) causing a robot arm (5) to move to a location corresponding to the identified part of the virtual three-dimensional surface and pick up an object (2) from the carrier (1) at this location.

2. A method according to claim 1, wherein the scanner (8) is moved in a path over the carrier (1) during the scanning operation.

3. A method according to claim 2, wherein the scanner (8) follows a linear path over the carrier.

4. A method according to claim 3, wherein the scanner (8) is a unit that is separate from the robot arm (5).

5. A method according to claim 2, wherein the scanner (8) is located on the robot arm (5) and the movement of the scanner (8) over the carrier (1) is performed by the robot arm (5).

6. A method according to claim 1, wherein the step of comparing the virtual three-dimensional surface to a pre-defined virtual object (15) includes rotating the virtual object (15) until it fits a part of the virtual three-dimensional surface and information about the rotation of the virtual object (15) is used to determine how the object (2) on the carrier (1) shall be picked up.

7. A method according to claim 1, wherein the object (2) that is picked up from the carrier (1) is picked by a gripper (6) on the robot arm (5) and the gripper (6) comprises gripper fingers (7) of which at least one is moved relative to another gripper finger (7) to grip the object (2) on the carrier (1).

8. A method according to claim 1, wherein a random selection is used to chose between different parts of the virtual three-dimensional surface in the case that two or more parts (2) of the virtual three-dimensional surface matches the virtual object (15) to the same degree.

9. A method according to claim 1, wherein the step of comparing the virtual three-dimensional surface to a pre-defined virtual object (15) includes rotating the virtual object (15) until it fits a part of the virtual three-dimensional surface and information about the orientation of the virtual object (15) is used to chose between different parts of the virtual three-dimensional surface in the case that two or more parts of the virtual three-dimensional surface matches the virtual object to the same degree.

10. A method according to claim 1, wherein the carrier (1) is a bin (1).

11. A method according to claim 1, wherein the carrier (1) is a conveyor.

12. An arrangement for locating and picking up objects (2) placed on a carrier, the arrangement comprising a line laser scanner (8) arranged to scan at least a part of carrier on which objects (2) may be placed, a robot (4) having a robot arm (5) adapted to seize objects and a computer connected to the line laser scanner (8), the computer (11) further having computer software designed to generate a virtual three-dimensional surface based on data received from the scanner (8) during a scanning operation, the computer (11) also having software representing a virtual object (15) and software for comparing the virtual object (15) to different parts of the virtual three-dimensional surface and determine which part or parts of the virtual surface that most closely matches the virtual object (15), the computer (11) further being connected to the robot (4) and having software for guiding the movement of the robot arm (5) to a location on the carrier corresponding to a part of the virtual three-dimensional surface that most closely matches the virtual object and pick up an object (2) at that location.

13. An arrangement according to claim 12, wherein the line laser scanner (8) is separate from the robot (4) and arranged to move in a pre-determined path defined by a guide structure (9) on which the scanner (8) is arranged to move.

14. An arrangement according to claim 13, wherein the guide structure (9) is a beam (9) that defines a linear path for the line laser scanner.

15. An arrangement according to claim 12, wherein the line laser scanner (8) is arranged on the robot arm (5).

16. An arrangement according to claim 12, wherein the robot arm (5) is adapted to seize objects by having a gripper (6) with gripper fingers (7), at least one of the gripper fingers (7) being movable.

## Patentansprüche

1. Verfahren zum Lokalisieren und Aufheben von auf einem Träger (1) platzierten Objekten (2), wobei das Verfahren die Schritte aufweist:
a) Ausführen eines Scan-Vorgangs über mindestens einen Teil des Trägers (1), indem ein Line Laser Scanner (8) verwendet wird;
b) Verwenden des Ergebnisses des Scannens, um eine den gescannten Bereich abbildende virtuelle dreidimensionale Oberfläche zu erzeugen;
c) Vergleichen der virtuellen dreidimensionalen Oberfläche mit einem vordefinierten virtuellen Objekt (15), das einem vom Träger (1) aufzuhebenden Objekt (2) entspricht, und dabei Identifizieren eines Teils der dreidimensionalen Oberfläche, die dem vordefinierten virtuellen Objekt (15) am meisten entspricht; und
d) Veranlassen eines Roboterarms (5), sich zu der dem identifizierten Teil der virtuellen dreidimensionalen Oberfläche entsprechenden Position zu bewegen und Aufheben eines Objekts (2) vom Träger (1) an dieser Position.

2. Verfahren gemäß Anspruch 1, wobei der Scanner (8) während des Scan-Vorgangs in einem Pfad über den Träger (1) bewegt wird.

3. Verfahren gemäß Anspruch 2, wobei der Scanner (8) einem linearen Pfad über dem Träger folgt.

4. Verfahren gemäß Anspruch 3, wobei der Scanner (8) eine vom Roboterarm (5) getrennte Einheit ist.

5. Verfahren gemäß Anspruch 2, wobei der Scanner (8) am Roboterarm (5) angeordnet ist und die Bewegung des Scanners (8) über dem Träger (1) vom Roboterarm (5) ausgeführt wird.

6. Verfahren gemäß Anspruch 1, wobei der Schritt des Vergleichens der virtuellen dreidimensionalen Oberfläche mit einem vordefinierten virtuellen Objekt (15) ein Rotieren des virtuellen Objekts (15) enthält, bis es einem Teil der virtuellen dreidimensionalen Oberfläche entspricht, und die Information über die Rotation des virtuellen Objekts (15) benutzt wird, um zu bestimmen, wie das Objekt (2) auf dem Träger (1) aufgehoben werden soll.

7. Verfahren gemäß Anspruch 1, wobei das vom Träger (1) aufgehobene Objekt (2) von einem am Roboterarm (5) angeordneten Greifer (6) aufgehoben wird und der Greifer (6) Greiffinger (7) aufweist, von denen mindestens einer relativ zu einem anderen Greiffinger (7) bewegt wird, um das Objekt (2) auf dem Träger (1) zu greifen.

8. Verfahren gemäß Anspruch 1, wobei eine Zufallsauswahl benutzt wird, um zwischen verschiedenen Teilen der virtuellen dreidimensionalen Oberfläche zu wählen, für den Fall, dass zwei oder mehr Teile (2) der virtuellen dreidimensionalen Oberfläche dem virtuellen Objekt (15) im gleichen Maße entsprechen.

9. Verfahren gemäß Anspruch 1, wobei der Schritt des Vergleichens der virtuellen dreidimensionalen Oberfläche mit einem vordefinierten virtuellen Objekt (15) ein Rotieren des virtuellen Objekts (15) beinhaltet, bis es einem Teil der virtuellen dreidimensionalen Oberfläche entspricht, und die Information der Orientierung des virtuellen Objekts (15) benutzt wird, um zwischen verschiedenen Teilen der virtuellen dreidimensionalen Oberfläche zu wählen, für den Fall, dass zwei oder mehr Teile der virtuellen dreidimensionalen Oberfläche dem virtuellen Objekt im gleichen Maße entsprechen.

10. Verfahren gemäß Anspruch 1, wobei der Träger (1) ein Behälter (1) ist.

11. Verfahren gemäß Anspruch 1, wobei der Träger (1) eine Fördervorrichtung ist.

12. Anordnung zum Lokalisieren und Aufheben von auf einem Träger (1) angeordneten Objekten (2), aufweisend:
einen Line Laser Scanner (8), ausgeführt, um mindestens einen Teil eines Trägers zu scannen, auf welchem Objekte (2) angeordnet sein können,
einen Roboter (4), der einen zum Greifen von Objekten ausgeführten Roboterarm (5) aufweist, und
einen mit dem Line Laser Scanner (8) verbundenen Computer,
wobei der Computer (11) zusätzlich eine Computer-Software aufweist, die dazu ausgeführt ist, eine virtuelle dreidimensionale Oberfläche zu erzeugen, die auf während eines Scan-Vorgangs vom Scanner (8) empfangenen Daten beruht,
wobei der Computer (11) auch eine Software zur Darstellung eines virtuellen Objekts (15) und eine Software zum Vergleich des virtuellen Objekts (15) mit verschiedenen Teilen der virtuellen dreidimensionalen Oberfläche sowie zum Ermitteln, welcher Teil oder welche Teile der virtuellen Oberfläche am meisten dem virtuellen Objekt (15) entsprechen, aufweist,
wobei der Computer (11) weiter mit einem Roboter (4) verbunden ist und eine Software zum Steuern der Bewegung des Roboterarms zu einer einem Teil der virtuellen dreidimensionalen Oberfläche am meisten entsprechenden Position auf dem Träger sowie zum Aufgreifen eines Objekts (2) an dieser Position aufweist.

13. Anordnung gemäß Anspruch 12, wobei der Line Laser Scanner (8) vom Roboter (4) getrennt angeordnet ist und dazu ausgeführt ist, sich in einem vordefinierten Pfad zu bewegen, der durch eine Lenkstruktur (9) definiert wird, an welcher der Scanner (8) angeordnet ist, um sich zu bewegen.

14. Anordnung gemäß Anspruch 13, wobei die Lenkstruktur (9) ein Strahl (9) ist, der einen linearen Pfad für den Line Laser Scanner definiert.

15. Anordnung gemäß Anspruch 12, wobei der Line Laser Scanner (8) am Roboterarm (5) angeordnet ist.

16. Anordnung gemäß Anspruch 12, wobei der Roboterarm (5) dazu ausgeführt ist, Objekte zu greifen, indem er einen Greifer (6) mit Greiffingern (7) aufweist, wobei mindestens einer der Greiffinger (7) beweglich ist.

## Revendications

1. Procédé permettant de localiser et de ramasser des objets (2) placés sur un support (1), le procédé comprenant les étapes consistant à :
a) réaliser une opération de balayage sur au moins une partie du support (1) en utilisant un dispositif de balayage laser linéaire (8) ;
b) utiliser le résultat du balayage pour générer une surface tridimensionnelle virtuelle représentant la zone qui a été balayée ;
c) comparer la surface tridimensionnelle virtuelle à un objet virtuel prédéfini (15) correspondant à un objet (2) à ramasser sur le support (1) et identifier ainsi une partie de la surface tridimensionnelle qui s'accorde le mieux avec l'objet virtuel prédéfini (15) ; et
d) amener un bras robotisé (5) à se déplacer vers un emplacement correspondant à la partie identifiée de la surface tridimensionnelle virtuelle et ramasser un objet (2) sur le support (1) à cet emplacement.

2. Procédé selon la revendication 1, dans lequel le dispositif de balayage (8) est déplacé suivant une trajectoire sur le support (1) pendant l'opération de balayage.

3. Procédé selon la revendication 2, dans lequel le dispositif de balayage (8) suit une trajectoire linéaire sur le support.

4. Procédé selon la revendication 3, dans lequel le dispositif de balayage (8) est une unité qui est séparée du bras robotisé (5).

5. Procédé selon la revendication 2, dans lequel le dispositif de balayage (8) est situé sur le bras robotisé (5) et le mouvement du dispositif de balayage (8) sur le support (1) est réalisé par le bras robotisé (5).

6. Procédé selon la revendication 1, dans lequel l'étape consistant à comparer la surface tridimensionnelle virtuelle à un objet virtuel prédéfini (15) comprend la rotation de l'objet virtuel (15) jusqu'à ce qu'il s'adapte à une partie de la surface tridimensionnelle virtuelle et des informations concernant la rotation de l'objet virtuel (15) sont utilisées pour déterminer la manière dont l'objet (2) sur le support (1) doit être ramassé.

7. Procédé selon la revendication 1, dans lequel l'objet (2) qui a été ramassé sur le support (1) est capturé par un organe de préhension (6) sur le bras robotisé (5) et l'organe de préhension (6) comprend des doigts de préhension (7) dont au moins l'un est déplacé par rapport à un autre doigt de préhension (7) pour attraper l'objet (2) sur le support (1).

8. Procédé selon la revendication 1, dans lequel une sélection aléatoire est utilisée pour choisir parmi différentes parties de la surface tridimensionnelle virtuelle au cas où deux parties (2) ou plus de la surface tridimensionnelle virtuelle s'accordent avec l'objet virtuel (15) au même degré.

9. Procédé selon la revendication 1, dans lequel l'étape consistant à comparer la surface tridimensionnelle virtuelle à un objet virtuel prédéfini (15) comprend la rotation de l'objet virtuel (15) jusqu'à ce qu'il s'adapte à une partie de la surface tridimensionnelle virtuelle et des informations concernant la rotation de l'objet virtuel (15) sont utilisées pour choisir parmi différentes parties de la surface tridimensionnelle virtuelle au cas où deux parties ou plus de la surface tridimensionnelle virtuelle s'accordent avec l'objet virtuel (15) au même degré.

10. Procédé selon la revendication 1, dans lequel le support (1) est une benne (1).

11. Procédé selon la revendication 1, dans lequel le support (1) est un transporteur.

12. Agencement permettant de localiser et de ramasser les objets (2) placés sur un support, l'agencement comprenant un dispositif de balayage laser linéaire (8) agencé pour balayer au moins une partie du support sur lequel des objets (2) peuvent être placés, un robot (4) comportant un bras robotisé (5) adapté pour saisir des objets et un ordinateur raccordé à un dispositif de balayage laser linéaire (8), l'ordinateur (11) comportant en outre un logiciel informatique conçu pour générer une surface tridimensionnelle virtuelle d'après des données reçues du dispositif de balayage (8) pendant une opération de balayage, l'ordinateur (11) comportant également un logiciel représentant un objet virtuel (15) et un logiciel permettant de comparer l'objet virtuel (15) à différentes parties de la surface tridimensionnelle virtuelle et déterminer quelle(s) partie ou parties de la surface virtuelle s'accordent le mieux avec l'objet virtuel (15), l'ordinateur (11) étant en outre raccordé au robot (4) et comportant un logiciel permettant de guider le mouvement du bras robotisé (5) vers un emplacement sur le support correspondant à une partie de la surface tridimensionnelle virtuelle qui s'accorde le mieux avec l'objet virtuel et ramasser un objet (2) à cet emplacement.

13. Agencement selon la revendication 12, dans lequel le dispositif de balayage laser linéaire (8) est séparé du robot (4) et est agencé pour se déplacer suivant une trajectoire prédéterminée définie par une structure de guide (9) sur laquelle le dispositif de balayage (8) est agencé pour se déplacer.

14. Agencement selon la revendication 13, dans lequel la structure de guide (9) est un faisceau (9) qui définit une trajectoire linéaire pour le dispositif de balayage laser linéaire.

15. Agencement selon la revendication 13, dans lequel le dispositif de balayage laser linéaire (8) est agencé sur le bras robotisé (5).

16. Agencement selon la revendication 12, dans lequel le bras robotisé (5) est adapté pour saisir des objets grâce à un organe de préhension (6) avec des doigts de préhension (7), au moins l'un des doigts de préhension (7) étant mobile.
